# EUROPÄISCHE PATENTSCHRIFT

(11) **EP 1 442 908 B1**
(45) Veröffentlichungstag und Bekanntmachung des Hinweises auf die Patenterteilung: **16.08.2006**
(21) Anmeldenummer: 04001896.2
(22) Anmeldetag: 29.01.2004
(51) Int. Cl.: B60J 10/00, B60J 10/08

(54) **Dichtungssystem für eine verschliessbare Karosserieöffnung eines Kraftfahrzeuges**
Sealing system for a closable opening in a vehicle body
Système d'étanchéité pour une ouverture dans un véhicule

(30) Priorität: 01.02.2003 DE 10304031
(43) Veröffentlichungstag der Anmeldung: 04.08.2004
(73) Patentinhaber: ADAM OPEL AG, 65423 Rüsselsheim (DE)
(72) Erfinder: Kiefer, Thomas, 60435 Frankfurt (DE)

(56) Entgegenhaltungen:
- EP-A- 1 078 801
- EP-A- 1 321 325
- US-A- 5 918 421
- US-B1- 6 357 182
- PATENT ABSTRACTS OF JAPAN Bd. 2002, Nr. 08, 5. August 2002 (2002-08-05) & JP 2002 096643 A (TOYO TIRE & RUBBER CO LTD), 2. April 2002 (2002-04-02)

## Beschreibung

Die Erfindung bezieht sich auf ein Dichtungssystem für eine verschließbare Karosserieöffnung eines Kraftfahrzeuges, insbesondere für eine Tür- oder Kofferraumöffnung, mit einem aufgeklebten Dichtungsprofil, wobei das Dichtungsprofil jeweils endseitig mit einem Halteklip befestigt ist.

Ein derartiges Dichtungsystem ist in der US 5,981,421 bzw. in der EP 1 078 801 A beschrieben.

Die DE 41 05 032 A1 offenbart eine Profilleiste aus einem formfesten Material zur Positionierung und Befestigung von Fahrzeugausstattungsteilen, insbesondere zur Befestigung eines Türdichtungsprofiles, an der Scharnierseite des Dichtrahmens einer Fondtür eines Personenkraftwagens, die mit Befestigungsmitteln an dem Dichtrahmen angebracht ist. Als Befestigungsmittel sind in Öffnungen des Dichtrahmens eingesetzte Halteklipse vorgesehen, die fest an der Profilleiste angeordnet sind.

Im Weiteren ist es allgemein bekannt, bei einem Kraftfahrzeug am Dichtrahmen einer Tür auf der Scharnierseite zwischen einer Bordkante und einem Längsträger ein Hakenprofil einzubauen, das ein aus Gummi bestehendes Türdichtungsprofil in der erforderlichen gekrümmten Form hält. Das leistenförmige Türdichtungsprofil wird mittels eines Kontaktklebers und unter Verwendung von Kunststoffklipsen befestigt, die durch Öffnungen des Türdichtungsprofils hindurch in Öffnungen des Dichtrahmens gesteckt werden.

Darüber hinaus ist es aus der Praxis bekannt, ein Dichtungsprofil für eine Kraftfahrzeugtür, einen Kofferraumdeckel, ein Schiebedach oder dergleichen karosserieseitig aufzukleben. Hierbei ergeben sich im Bereich der freien Enden des Dichtungsprofils Probleme, da sich die freien Enden bei einer Belastung oftmals von der Karosserie lösen und danach regellos im Inneren des Kraftfahrzeuges hängen.

Es ist Aufgabe der Erfindung, ein Dichtungssystem der eingangs genannten Art zu schaffen, dessen Dichtungsprofil mit einfachen Mitteln zuverlässig an der Karosserie gehalten ist.

Erfindungsgemäß wird die Aufgabe dadurch gelöst, dass der Halteklip an der jeweiligen Stirnseite des Dichtungsprofils angeordnet ist.

Der jeweils stirnseitige Halteklip legt das geklebte Dichtungsprofil an der Karosserie fest, so dass ein Ablösen des Dichtungsprofils im Bereich seiner freien Enden zuverlässig verhindert ist.

Vorzugsweise umfasst der Halteklip zum einen einen in einer Karosseriebohrung festgelegten Klipsansatz und zum anderen einen in einen Zwischenraum des Dichtungsprofils eingreifenden Kopf. Durch das Einsetzen des Kopfes des Halteklipses in den Zwischenraum des Dichtungsprofils wirkt sich der Halteklip nicht optisch störend auf das Erscheinungsbild des Dichtungssystems aus. Darüber hinaus benötigt der Halteklip lediglich einen relativ geringen zusätzlichen Einbauraum.

Zur Befestigung des Halteklipses an der Karosserie taucht vorteilhafterweise der Klipsansatz in einen Hohlraum der Karosserie ein und umfasst umfangsseitige Federarme, die zur Festlegung des Halteklipses in dem Hohlraum an der Karosserie anliegen. Die Federarme können beispielsweise derart bemessen sein, dass sie unter Vorspannung an der Karosserie anliegen.

Nach einer vorteilhaften Ausgestaltung der Erfindung erstreckt sich der Kopf des Halteklipses senkrecht zu dem Klipsansatz und greift in den von dem im Querschnitt im Wesentlichen C-förmigen Dichtungsprofil gebildeten Zwischenraum ein. Sonach ist der Halteklip im Querschnitt annähernd L-förmig gestaltet, wobei der Klipsansatz den einen Schenkel und der Kopf den anderen Schenkel bildet. Selbstverständlich liegt der Kopf unter Vorspannung in dem Zwischenraum an dem Dichtungsprofil an und presst dieses gegen die Karosserie.

Um ein Kriechen des Materials des Halteklipses aufgrund der vorgespannten Befestigung des Dichtungsprofils zu minimieren und damit eine relativ langandauernde vorgespannte Halterung des Dichtungsprofils zu gewährleisten, ist bevorzugt an dem Kopf des Halteklipses ein an der Karosserie anliegender, in Richtung des Klipsansatzes weisender Stützansatz angeformt.

Zweckmäßigerweise verläuft der Stützansatz in Längsrichtung sowie über einen Teil der Stirnseite des Dichtungsprofils. Damit liefert der Stützansatz eine hinreichende Auflagefläche, um den auf den Kopf wirkenden Drehmomenten entgegen zu wirken, wobei die Drehmomente durch die Rückstellkraft des elastischen Dichtungsprofils verursacht werden, auf der Kopf unter Vorspannung aufliegt. Des Weiteren schützt der das Dichtungsprofil endseitig partiell umgreifende Stützansatz das freie Ende des Dichtungsprofils vor einer Beschädigung und vor dem unbeabsichtigten Lösen der Klebeverbindung mit der Karosserie.

Bevorzugt ist der Halteklip unter Zwischenanordnung einer Hülse in der Karosseriebohrung befestigt, wobei ein Bund der Hülse auf der dem Dichtungsprofil zugewandten Seite der Karosserie aufliegt und die Hülse in den Hohlraum der Karosserie eintaucht. Vorteilhafterweise weist die Hülse einen Boden mit einer Bohrung auf, in die ein pilzkopfförmiges freies Ende des Klipsansatzes des Halteklipses unverlierbar eingesetzt ist. Zweckmäßigerweise ist die Hülse mit umfangsseitigen Schlitzen für die Federarme des Halteklipses versehen. Die Hülse und der Halteklip können als Baugruppe vormontiert sein und werden gemeinsam zu ihrer Festlegung an der Karosserie in die Karosseriebohrung derart eingesetzt, dass die Federarme ein Herausziehen von Hülse und Halteklip verhindern.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigen:

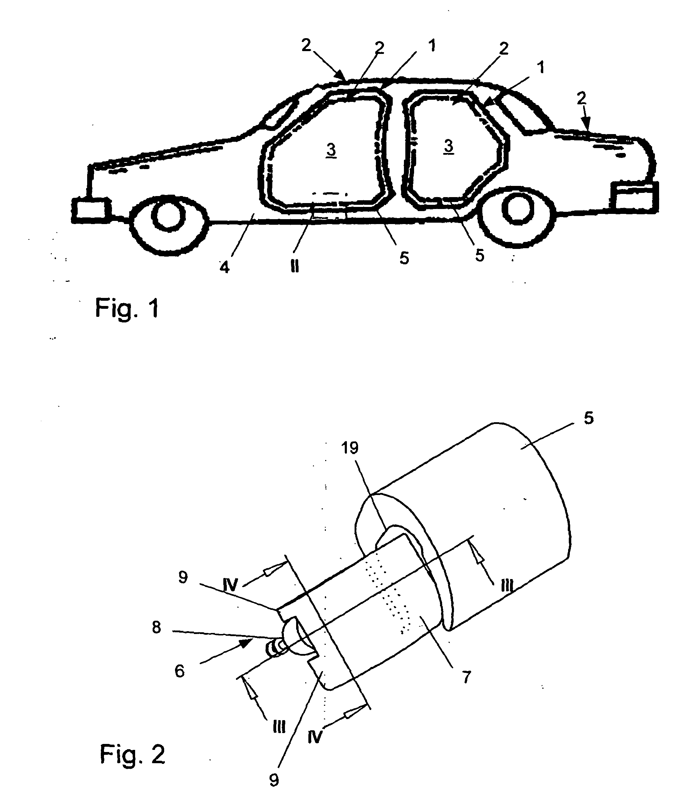

- Fig. 1: eine Darstellung eines Kraftfahrzeuges mit mehreren erfindungsgemäßen Dichtungssystemen,
- Fig. 2: eine vergrößerte perspektivische Teildarstellung der Einzelheit II nach Fig. 1,
- Fig. 3: eine Schnittdarstellung gemäß der Linie III-III nach Fig. 2 und
- Fig. 4: eine Schnittdarstellung gemäß der Linie IV-IV nach Fig. 2.

Ein Kraftfahrzeug umfasst mehrere Dichtungssysterne 1 für verschließbare Karosserieöffnungen 2, also Türöffnungen 3 und eine Kofferraumöffnung, wobei jedes Dichtungssystem 1 ein auf eine Karosserie 4 aufgeklebtes Dichtungsprofil 5 umfasst. Das Dichtungsprofil 5 ist im Bereich seiner freien Enden durch jeweils einen Halteklip 6 zusätzlich an der Karosserie 4 festgelegt.

Der Halteklip 6 umfasst einen das Dichtungsprofil 5 beaufschlagenden Kopf 7 und einen karosserieseitig festgelegten Klipsansatz 8, wobei der Kopf 7 in einen Zwischenraum 19 des im Querschnitt im Wesentlichen C-förmigen Dichtungsprofils 5 stirnseitig eingesetzt ist und das Dichtungsprofil 5 unter Vorspannung an der Karosserie haltert. Der Kopf 7 erstreckt sich rechtwinklig zum Klipsansatz 8, so dass der Halteklip 5 annähernd L-förmig ausgeführt ist. Im Weiteren ist eine Längsachse des Kopfes 7 außermittig und damit exzentrisch zu dem Klipsansatz 8 ausgerichtet, weshalb zur Befestigung gegenüberliegender Enden des Dichtungsprofils 5 ein rechts- und ein linksseitiger Halteklip 6 benötigt wird. An dem Kopf 7 ist ein in Richtung der Karosserie 4 weisender Stützansatz 9 angeformt, der das Dichtungsprofil 5 in Längsrichtung sowie stirnseitig bereichsweise übergreift und dem von dem Dichtungsprofil 5 auf den Kopf 7 übertragenen Drehmoment entgegenwirkt.

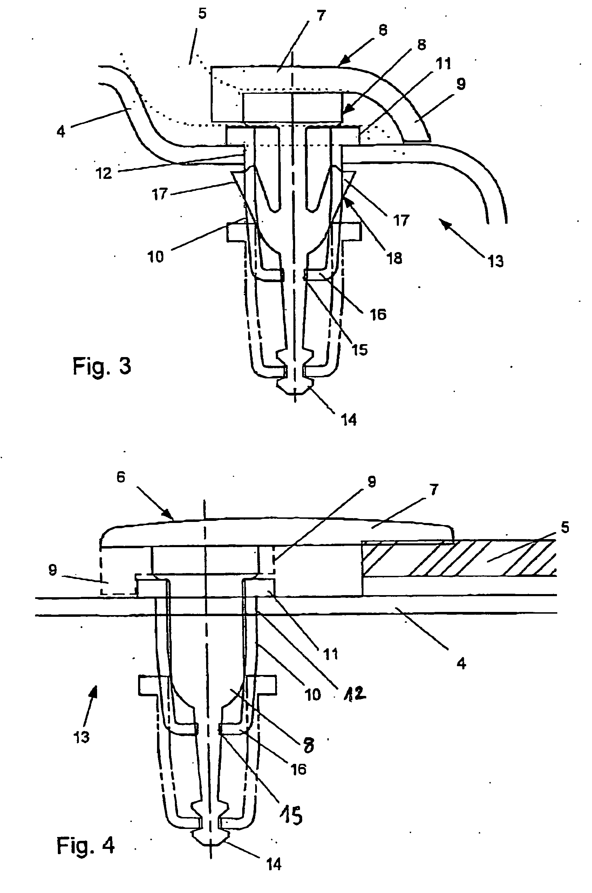

Zur Befestigung des Halteklipses 6 an der Karosserie 4 ist eine Hülse 10 mit einem umlaufenden Bund 11 vorgesehen, die derart in eine Karosseriebohrung 12 eingesetzt wird, dass der Bund 11 auf der dem Dichtungsprofil 5 zugewandten Seite der Karosserie 4 aufliegt und die Hülse 10 in einen Hohlraum 13 der Karosserie 4 eintaucht. In die Hülse 10 ist der Klipsansatz 8 des Halteklipses 6 eingesetzt, wobei ein pilzkopfförmiges freies Ende 14 des Klipsansatzes 8 vor der Montage in einer Bohrung 15 im Boden 16 der Hülse 10 gehalten ist (siehe strichpunktierte Darstellung der Hülse 10 in den Figuren 3 und 4). Federarme 17 des Klipsansatzes 8 durchragen umfangsseitige Schlitze 18 der Hülse 10 und liegen im Hohlraum 13 an der Karosserie 4 an, um den Halteklip 5 mitsamt der Hülse 10 unter Vorspannung festzulegen.

### Bezugszeichenliste

- 1.: Dichtungssystem
- 2.: Karosserieöffnung
- 3.: Türöffnung
- 4.: Karosserie
- 5.: Dichtungsprofil
- 6.: Halteklip
- 7.: Kopf
- 8.: Klipsansatz
- 9.: Stützansatz
- 10.: Hülse
- 11.: Bund
- 12.: Karosseriebohrung
- 13.: Hohlraum
- 14.: freies Ende von 8
- 15.: Bohrung
- 16.: Boden
- 17.: Federarm
- 18.: Schlitz
- 19.: Zwischenraum von 5

## Patentansprüche

1. Dichtungssystem für eine verschließbare Karosserieöffnung (2) eines Kraftfahrzeuges, insbesondere für eine Tür- (3) oder Kofferraumöffnung, mit einem aufgeklebten Dichtungsprofil (5), wobei das Dichtungsprofil (5) jeweils endseitig mit einem Halteklip (6) befestigt ist, **dadurch gekennzeichnet, dass** das Dichtungsprofil an des Fahrzeugkarosserie aufgeklebt und durch den Halteklip befestigt ist, und **dass** der Halteklip (6) an der jeweiligen Stirnseite des Dichtungsprofils (5) angeordnet ist.

2. Dichtungssystem nach Anspruch 1, **dadurch gekennzeichnet, dass** der Halteklip (6) zum einen einen in einer Karosseriebohrung (12) festgelegten Klipsansatz (8) und zum anderen einen in einen Zwischenraum (19) des Dichtungsprofils (5) eingreifenden Kopf (7) umfasst.

3. Dichtungssystem nach Anspruch 2, **dadurch gekennzeichnet, dass** eine Längsachse des Kopfes (7) außermittig und damit exzentrisch zu dem Klipsansatz (8) ausgerichtet ist.

4. Dichtungssystem nach Anspruch 2 oder 3, **dadurch gekennzeichnet, dass** der Klipsansatz (8) in einen Hohlraum (13) der Karosserie (4) eintaucht und umfangsseitige Federarme (17) umfasst, die zur Festlegung des Halteklipses (6) in dem Hohlraum (13) an der Karosserie (4) anliegen.

5. Dichtungssystem nach Anspruch 2, 3 oder 4, **dadurch gekennzeichnet, dass** sich der Kopf (7) des Halteklipses (6) senkrecht zu dem Klipsansatz (8) erstreckt und in den von dem im Querschnitt im Wesentlichen C-förmigen Dichtungsprofil (5) gebildeten Zwischenraum (19) eingreift.

6. Dichtungssystem nach einem der Ansprüche 2 bis 5, **dadurch gekennzeichnet, dass** an dem Kopf (7) des Halteklipses (6) ein an der Karosserie (4) anliegender, in Richtung des Klipsansatzes (8) weisender Stützansatz (9) angeformt ist.

7. Dichtungssystem nach Anspruch 6, **dadurch gekennzeichnet, dass** der Stützansatz (9) in Längsrichtung sowie über einen Teil der Stirnseite des Dichtungsprofils (5) verläuft.

8. Dichtungssystem nach einem der Ansprüche 1 bis 7, **dadurch gekennzeichnet, dass** der Halteklip (6) unter Zwischenanordnung einer Hülse (10) in der Karosseriebohrung (12) befestigt ist, wobei ein Bund (11) der Hülse (10) auf der dem Dichtungsprofil (5) zugewandten Seite der Karosserie (4) aufliegt und die Hülse (10) in den Hohlraum (13) der Karosserie (4) eintaucht.

9. Dichtungssystem nach Anspruch 8, **dadurch gekennzeichnet, dass** die Hülse (10) einen Boden (16) mit einer Bohrung (15) aufweist, in die ein pilzkopfförmiges freies Ende (14) des Klipsansatzes (8) des Halteklipses (6) unverlierbar eingesetzt ist.

10. Dichtungssystem nach Anspruch 8 oder 9, **dadurch gekennzeichnet, dass** die Hülse (10) mit umfangsseitigen Schlitzen (18) für die Federarme (17) des Halteklipses (6) versehen ist.

## Claims

1. A sealing system for a closable bodywork opening (2) in a motor vehicle, in particular for a door (3) or boot opening, comprising an adherent sealing profile (5), wherein the sealing profile (5) is fastened at the ends thereof by a respective retaining clip (6), **characterized in that** the sealing profile is adhered to the vehicle bodywork and is fastened by the retaining clip, and **in that** the retaining clip (6) is arranged at the respective end face of the sealing profile (5).

2. A sealing system in accordance with Claim 1, **characterized in that** the retaining clip (6) comprises a clip stud (8) that is fixed in a boring (12) in the bodywork on the one hand and a head (7) that engages in a space (19) in the sealing profile (5) on the other.

3. A sealing system in accordance with Claim 2, **characterized in that** a longitudinal axis of the head (7) is off-centre and is thus directed eccentrically relative to the clip stud (8).

4. A sealing system in accordance with Claim 2 or 3, **characterized in that** the clip stud (8) protrudes into a cavity (13) in the bodywork (4) and comprises peripherally-located spring arms (17) which rest against the bodywork (4) for the purposes of fixing the retaining clip (6) in the cavity (13).

5. A sealing system in accordance with Claim 2, 3 or 4, **characterized in that** the head (7) of the retaining clip (6) extends perpendicularly with respect to the clip stud (8) and engages in the space (19) formed by the sealing profile (5) which is substantially C-shaped in cross section.

6. A sealing system in accordance with any of the Claims 2 to 5, **characterized in that** a supporting lug (9) is formed on the head (7) of the retaining clip (6), said lug resting on the bodywork (4) and directed toward the clip stud (8).

7. A sealing system in accordance with Claim 6, **characterized in that** the supporting lug (9) runs in the longitudinal direction and over a part of the end face of the sealing profile (5).

8. A sealing system in accordance with any of the Claims 1 to 7, **characterized in that** the retaining clip (6) is fixed in the boring (12) in the bodywork through the intermediary of a sleeve (10), whereby a collar (11) of the sleeve (10) rests on the side of the bodywork (4) facing the sealing profile (5) and the sleeve (10) protrudes into the cavity (13) of the bodywork (4).

9. A sealing system in accordance with Claim 8, **characterized in that** the sleeve (10) comprises a base (16) incorporating a boring (15) into which a mushroom-shaped free end (14) of the clip stud (8) of the retaining clip (6) is inserted in captive manner.

10. A sealing system in accordance with Claim 8 or 9, **characterized in that** the sleeve (10) is provided with peripherally-located slots (18) for the spring arms (17) of the retaining clip (6).

## Revendications

1. Système d'étanchéité destiné à un ouvrant de carrosserie (2) d'un véhicule, notamment à une ouverture de porte (3) ou à une ouverture de coffre, avec un profilé d'étanchéité (5) collé, le profilé d'étanchéité (5) étant fixé à chacune de ses extrémités par un clip de fixation (6), **caractérisé en ce que** le profilé d'étanchéité est collé à la carrosserie du véhicule et fixé par le clip de fixation (6), et **en ce que** le clip de fixation (6) est placé au bord de chaque extrémité du profilé d'étanchéité (5).

2. Système d'étanchéité selon la revendication 1, **caractérisé en ce que** le clip de fixation (6) se compose d'une part d'une tige (8) enfoncée dans un orifice (12) de la carrosserie et d'autre part d'une tête (7) insérée dans une rainure (19) du profilé d'étanchéité (5).

3. Système d'étanchéité selon la revendication 2, **caractérisé en ce qu'**un axe longitudinal de la tête (7) est décentré et de ce fait disposé de façon excentrique par rapport à la tige (8) du clip.

4. Système d'étanchéité selon la revendication 2 ou 3, **caractérisé en ce que** la tige (8) du clip est enfoncée dans un espace creux (13) de la carrosserie (4) et comporte des griffes (17) sur sa circonférence, qui maintiennent le clip de fixation (6) dans l'espace creux (13) en appuyant contre la carrosserie (4).

5. Système d'étanchéité selon la revendication 2, 3 ou 4, **caractérisé en ce que** la tête (7) du clip de fixation (6) est perpendiculaire à la tige (8) du clip, et est insérée dans la rainure (19) du profilé d'étanchéité (5) dont la section est globalement en C.

6. Système d'étanchéité selon l'une des revendications 2 à 5, **caractérisé en ce que** la tête (7) du clip de fixation (6) est munie d'un talon de soutien (9) appuyé contre la carrosserie (4) et pointant dans la direction de la tige (8) du clip.

7. Système d'étanchéité selon la revendication 6, **caractérisé en ce que** le talon de soutien (9) est disposé dans la longueur du profilé d'étanchéité (5) dont il recouvre une partie de la face interne.

8. Système d'étanchéité selon l'une des revendications 1 à 7, **caractérisé en ce que** le clip de fixation (6) est fixé dans l'orifice (12) de la carrosserie avec intercalage d'une gaine (10), un rebord (11) de la gaine (10) étant appuyé contre le côté de la carrosserie (4) qui fait face au profilé d'étanchéité (5), et le corps de la gaine (10) étant enfoncé dans l'espace creux (13) de la carrosserie (4).

9. Système d'étanchéité selon la revendication 8, **caractérisé en ce que** la gaine (10) présente un fond (16) percé d'un orifice (15), dans lequel est insérée une extrémité libre (14) en forme de champignon de la tige (8) du clip de fixation (6), de manière inamovible.

10. Système d'étanchéité selon la revendication 8 ou 9, **caractérisé en ce que** la gaine (10) est munie de fentes (18) sur ses parois latérales pour laisser ressortir les griffes (17) du clip de fixation (6).
